# EUROPEAN PATENT APPLICATION

(11) **EP 4 744 555 A1**
(43) Date of publication of application: **20.05.2026**
(21) Application number: 23945959.7
(22) Date of filing: 18.07.2023
(51) Int. Cl.: A47J 31/52, A47J 31/36, A47J 31/46, G06Q 50/10

(54) **BEVERAGE APPARATUS AND METHOD FOR CONTROLLING SAME**

(71) Applicant: LG Electronics Inc., Yeongdeungpo-gu Seoul 07336 (KR)
(72) Inventor: LEE, Joon Bum, Seoul 08592 (KR); LEE, Jungsuk, Seoul 08592 (KR); LEE, Yeontaek, Seoul 08592 (KR); CHA, Jungmin, Seoul 08592 (KR)
(74) Representative: Ter Meer Steinmeister & Partner
(86) International application number: PCT/KR2023/010325
(87) International publication number: WO 2025/018449

(57) **Abstract**

The present invention provides a beverage apparatus and a method for controlling same, wherein beverages are extracted from two extraction units in a preset order and in a preset extraction amount by using blending information set by a user or blending information about a recipe selected by the user. Accordingly, beverages stored in two or more capsules can be blended and served according to the user's recipe.

## Description

### Technical Field

The present disclosure relates to a beverage apparatus for extracting a beverage from a capsule and a control method thereof.

### Background Art

Capsules in which ingredients for preparing a beverage are sealed have been widely used. Such capsules store the beverage ingredients in a sealed state, and a user can prepare a beverage by passing water through each of the capsules by using a machine. A representative beverage apparatus employing capsules is a coffee machine. Recently, not only coffee ingredients but also beverage ingredients have been provided in capsules to allow preparation and consumption of beverages.

Devices for extracting a beverage by using a capsule have been disclosed in Korean Patent Application Publication No. 10-2015-0017541 (Prior Art 1), Korean Patent Application Publication No. 10-2017-0040026 (Prior Art 2), Korean Patent No. 10-0924447 (Prior Art 3), Korean Patent No. 10-1260504 (Prior Art 4), and Korean Patent Application Publication No. 10-2018-0000496 (Prior Art 5).

According to the above-described prior arts, a beverage is extracted from a single capsule. Accordingly, in the prior arts, only a predetermined type of beverage could be extracted, and beverages blended in various ways according to preference of a user were not provided. That is, in the prior arts, a blended beverage according to preference of a user was prepared by sequentially extracting beverages from capsules in which different types of beverages are sealed and then mixing the extracted beverages with each other.

However, the above-described method has the drawback that the flavors of blended beverages are not diverse. That is, in the above-described method, each beverage is first extracted and then only a mixing volume thereof is adjusted regardless of a temperature thereof, and thus an optimal flavor corresponding to the blending has not been provided.

In addition, the above-described method has the drawback that it requires a long period of time because a plurality of beverages is extracted sequentially. That is, since one beverage is extracted first and then another beverage is extracted, the overall extraction time is inevitably prolonged.

In particular, an initially extracted beverage and another beverage extracted thereafter have a drawback in that the optimal flavor resulting from blending the two beverages cannot be provided, because a temperature difference occurs between the beverages due to a difference in the times at which their respective extractions are completed.

In Korean Patent No. 10-1284550 (Prior Art 6), a beverage extraction apparatus for sequentially extracting two beverages of the same type or of different types is disclosed. Prior Art Document 6 relates to a technique in which, during the extraction of a capsule beverage, hot water can remain inside the capsule for a sufficient period of time to allow dissolution or steeping. To this end, in Prior Art, 6 an extraction valve is provided in a discharge flow path through which a beverage extracted by passing through each capsule is discharged, thereby preventing the beverage from being discharged for a predetermined time. In addition, in Prior Art 6, a water supply valve is provided in a supply flow path that supplies hot water to the capsule, so that hot water is selectively supplied to each capsule.

However, in the Prior Art 6, respective valves are required to be provided on the hot-water inlet side of the capsule and on the beverage outlet side of the capsule, so the overall control inevitably is complicated.

In addition, in the case of Prior Art 6, a water-supply valve installed in the supply flow path of each of capsules, or an extraction valve installed in the discharge flow path thereof, must be positioned adjacent to two trays in which the respective capsules are seated. Accordingly, in Prior Art 6, the size and weight of a portion for extracting a beverage inevitably increase. As a result, Prior Art 6 inevitably has limitations in designing the exterior of the beverage extraction apparatus.

In addition, in Prior Art 6, beverages of multiple cups are merely allowed to be extracted simultaneously, and thus the blending of the respective beverages must be performed directly by a user, which is inconvenient. That is, in the case of Prior Art 6, since extracted beverages are respectively provided to two beverage cups through the two discharge flow paths, a user inevitably performed the blending of the beverages manually. Furthermore, because the blending method simply involves mixing the two extracted beverages at a predetermined ratio, it was not possible to enjoy blended beverages with a variety of flavors.

### Disclosure

### Technical Problem

The present disclosure has been devised to solve the various problems associated with the above-described prior arts, and an objective of the present disclosure is to enable multiple beverages to be blended during an extraction process and provided.

An objective of the present disclosure is to allow an extraction volume to be considered when blending beverages.

An objective of the present disclosure is to allow an extraction temperature to be considered when blending beverages.

An objective of the present disclosure is to allow extraction pressure to be considered when blending beverages.

An objective of the present disclosure is to allow the supply sequence of extraction water to be considered during when blending beverages.

An objective of the present disclosure is to allow operation control for beverage blending to be performed through a mobile application of a user.

An objective of the present disclosure is to allow beverages to be blended according to a recommended recipe.

An objective of the present disclosure is to allow the mounting position of a capsule to be set to be different depending on the type or extraction temperature of a beverage.

### Technical Solution

According to a beverage apparatus of the present disclosure for achieving the above-described objectives, extraction water may be sequentially supplied to capsules provided in a plurality of extraction parts to extract beverages, and the extracted beverages may fall into a beverage cup through a single outlet so as to be blended.

According to the beverage apparatus of the present disclosure, extraction water may be sequentially supplied to a plurality of spaces in which the capsules are accommodated.

According to the beverage apparatus of the present disclosure, a discharge part may be configured to receive beverages that have passed through the plurality of extraction parts and to discharge the beverages to the beverage cup through a single guide tube.

According to the beverage apparatus of the present disclosure, beverages that have sequentially passed through the plurality of extraction parts may be sequentially supplied into the single beverage cup so as to be blended.

According to the beverage apparatus of the present disclosure, a base on which the beverage cup is placed may be included, and beverages extracted from the extraction parts may flow down into the beverage cup on an upper surface of the base.

According to the beverage apparatus of the present disclosure, a heavy-weight component may be provided inside the base, and each of the extraction parts may include only a flow path for delivering extraction water to each of the capsules after perforating the capsule.

According to the beverage apparatus of the present disclosure, a water tank, a pump, a valve, and a controller may be provided inside the base. Accordingly, the weight of the extraction parts may be reduced.

According to the beverage apparatus of the present disclosure, the plurality of extraction parts and the discharge part may be provided in a housing that is provided separately from the base.

According to the beverage apparatus of the present disclosure, extraction water supplied to the extraction parts from within the base may be supplied with a controlled temperature. To this end, a heating part may be provided inside the base.

According to the beverage apparatus of the present disclosure, blending information for extracting beverages for the respective extraction parts may be acquired online or offline.

According to the beverage apparatus of the present disclosure, the blending information may be information that is input by a user, retrieved online, or previously stored in a memory.

Further, according to a beverage apparatus control method of the present disclosure, a process of acquiring the blending information may be included.

According to the beverage apparatus control method of the present disclosure, an extraction order for the capsules respectively provided to the plurality of extraction parts may be input. Accordingly, a user may directly select the blending information.

According to the beverage apparatus control method of the present disclosure, a user may directly select the blending information.

According to the beverage apparatus control method of the present disclosure, the blending information may include an extraction order for the beverages of the respective extraction parts.

According to the beverage apparatus control method of the present disclosure, the blending information may include an extraction volume or an extraction ratio for the beverages of the respective extraction parts.

According to the beverage apparatus control method of the present disclosure, the blending information may further include at least one of an extraction temperature, an extraction pressure, and an extraction time for each extraction order.

According to the beverage apparatus control method of the present disclosure, each device may be controlled in a predetermined pattern by using the blending information input by a user.

According to the beverage apparatus control method of the present disclosure, the extraction order of each of the capsules may be determined on the basis of the blending information received. Accordingly, a beverage flavor that varies depending on the extraction order of two beverages to be blended may be provided.

According to the beverage apparatus control method of the present disclosure, an extraction volume or an extraction ratio of a beverage for each extraction sequence may be determined by using the blending information.

According to the beverage apparatus control method of the present disclosure, a beverage flavor that varies depending on an extraction order or an extraction volume of two beverages to be blended may be provided.

According to the beverage apparatus control method of the present disclosure, beverages extracted from the respective capsules may be sequentially dispensed into a beverage cup, thereby being blended.

According to the beverage apparatus control method of the present disclosure, a process of acquiring information of the capsule may be included.

According to the beverage apparatus control method of the present disclosure, a seating position of the capsule in each of the extraction parts may be determined on the basis of information of the capsule.

According to the beverage apparatus control method of the present disclosure, the blending information may be automatically recommended on the basis of information of the capsule.

According to the beverage apparatus control method of the present disclosure, a process of recommending a recipe for extracting a beverage from the capsule may be included. Accordingly, a user may be provided with blended beverages of various flavors even without basic knowledge of blending.

According to the beverage apparatus control method of the present disclosure, an extraction order of each of the capsules may be set to be different.

According to the beverage apparatus control method of the present disclosure, an extraction volume or an extraction ratio of a beverage for each extraction sequence may be determined by using an acquired recipe. Accordingly, a beverage flavor that varies depending on the extraction volumes of two beverages to be blended may be provided.

According to the beverage apparatus control method of the present disclosure, a beverage with a relatively low extraction temperature from a capsule may be extracted first. Accordingly, it may be possible to provide a blended beverage quickly without requiring a process to lower the temperature of heated extraction water.

According to the beverage apparatus control method of the present disclosure, the blending information may include either a recipe previously registered by a user or a recommended recipe.

### Advantageous Effects

The beverage apparatus of the present disclosure and the control method thereof, as described above, may have at least one of the following effects.

According to the beverage apparatus of the present disclosure and the control method thereof, multiple beverages may be blended and provided through sequential extraction. That is, instead of blending by completely extracting beverages and then mixing the beverages, the beverages may be blended during extraction by controlling a temperature, pressure, or an extraction volume to be different, thereby enabling the provision of blended beverages with a greater variety of flavors.

In addition, according to the beverage apparatus of the present disclosure and the control method thereof, the extraction order for each beverage from each capsule during blending beverages may be selected to be different as needed, and since two or more extraction orders may be provided, a greater variety of flavors may be obtained.

Further, according to the beverage apparatus of the present disclosure and the control method thereof, an extraction volume of each capsule during blending beverages may be set to be different, thereby providing a greater variety of flavors.

In addition, according to the beverage apparatus of the present disclosure and the control method thereof, extraction temperature or pressure during beverage blending may be set to be different, thereby providing a greater variety of flavors.

Furthermore, according to the beverage apparatus of the present disclosure and the control method thereof, by providing the blending information in the form of a recipe, a plurality of blending information items may be input all at once through the selection of a single recipe. Accordingly, information may be input conveniently.

In addition, according to the beverage apparatus of the present disclosure and the control method thereof, operation control for beverage blending may be performed via a mobile application. Accordingly, information may be input conveniently.

Additionally, according to the beverage apparatus of the present disclosure and the control method thereof, the mounting position of a capsule or the supply order of extraction water may be set to be different depending on the type or extraction temperature of a beverage.

In addition, the beverage apparatus of the present disclosure and the control method thereof may allow blending in a form having a plurality of beverage layers.

### Description of Drawings

FIG. 1 is a block diagram of a beverage apparatus of an embodiment of the present disclosure.
FIG. 2 is a perspective view illustrating an example of the beverage apparatus according to an embodiment of the present disclosure.
FIG. 3 is a front cross-sectional view illustrating an example of the beverage apparatus according to an embodiment of the present disclosure.
FIG. 4 is a plan view illustrating an internal structure of a base of the beverage apparatus according to an embodiment of the present disclosure.
FIG. 5 is a side cross-sectional view illustrating an example of the beverage apparatus according to an embodiment of the present disclosure.
FIG. 6 is a flowchart of a control method of the beverage apparatus according to an embodiment of the present disclosure.
FIG. 7 is a flowchart illustrating an example of an information acquisition step in the control method of the beverage apparatus according to an embodiment of the present disclosure.
FIG. 8 is a flowchart illustrating another example of the information acquisition step in the control method of the beverage apparatus according to an embodiment of the present disclosure.
FIG. 9 is a flowchart illustrating a blending step in the control method of the beverage apparatus according to an embodiment of the present disclosure.
FIG. 10 is a flowchart illustrating a recipe registration step in the control method of the beverage apparatus according to an embodiment of the present disclosure.
FIGS. 11 to 15 are views illustrating examples of various screens displayed on an application or a display window associated with the beverage apparatus of an embodiment of the present disclosure.
FIGS. 16 to 19 are views illustrating a beverage extraction process performed by the beverage apparatus according to an embodiment of the present disclosure.
FIGS. 20 to 22 are flowcharts illustrating an example of a beverage blending process by using the beverage apparatus of the present disclosure.
FIG. 23 is a view illustrating a blended beverage produced as the example of the beverage blending process by using the beverage apparatus of the present disclosure.
FIGS. 24 to 26 are flowcharts illustrating another example of the beverage blending process by using the beverage apparatus of the present disclosure.
FIG. 27 is a view illustrating a blended beverage produced as the another example of the beverage blending process by using the beverage apparatus of the present disclosure.

### Mode for Invention

Hereinafter, some embodiments of the present disclosure will be described in detail with reference to exemplary drawings. When adding reference numerals to components in each drawing, it should be noted that identical components are given the same reference numerals as much as possible even if they are shown in different drawings. In addition, when describing the embodiments of the present disclosure, if a detailed description of the relevant known configuration or function is judged to hinder understanding of the embodiments of the present disclosure, detailed descriptions thereof will be omitted.

The present disclosure relates to a beverage apparatus capable of blending two or more capsule beverages, and a control method thereof.

The beverage apparatus according to an embodiment of the present disclosure is a beverage apparatus that uses capsules (11, 12).

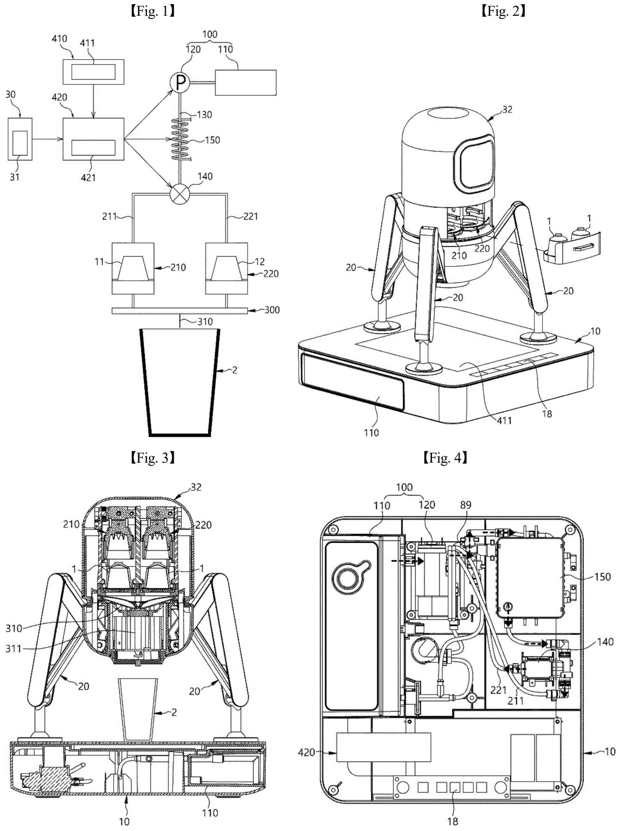

In FIG. 1, a schematic configuration of the beverage apparatus according to an embodiment of the present disclosure is illustrated in a block form. In addition, FIGS. 2 to 5 are a perspective view of the beverage apparatus and cross-sectional views showing an internal state thereof for an example of the beverage apparatus of the present disclosure.

As illustrated in the drawings, the beverage apparatus according to an embodiment of the present disclosure is configured such that extraction water is supplied to each of extraction parts (210, 220), beverages are sequentially extracted therefrom, and the extracted beverages are sequentially provided into a single beverage cup (2) through a discharge part (300) so as to be blended. Accordingly, the beverages from the capsules (11, 12) provided to the respective extraction parts (210, 220) may be blended under different blending conditions and provided to the beverage cup (2).

First, the beverage apparatus according to an embodiment of the present disclosure may include a water supply part (100) for supplying extraction water.

The water supply part (100) may serve to supply extraction water for extracting the beverages from the capsules (11, 12). The extraction water may be water, a liquid other than water, or steam.

The water supply part (100) may be provided, for example, in a base (10). The base (10) may constitute a bottom of the beverage apparatus of the present disclosure and may be configured to provide a region on an upper surface thereof on which the beverage cup is placed.

The water supply part (100) may include a water tank (110) in which extraction water is stored, and a pump (120). That is, the water supply part (100) may pump the extraction water (e.g., water) stored in the water tank (110) by means of the pump (120) and supply the extraction water to each flow path to be described later.

The pump (120) may be provided as a pump capable of adjusting extraction pressure. In one example, the pump (120) may be provided as a variable-displacement piston pump.

Although not illustrated, the water supply part (100) may be directly connected to a tap water source or a water purifier without using the water tank (110) and the pump (120). In this case, the extraction water supplied from the water supply part (100) may be tap water or purified water.

The water supply part (100) may include a main flow path (130). The main flow path (130) may be connected to the water tank (110) of the water supply part (100) and may guide the flow of water pumped by the operation of the pump (120).

A heating part (150) may be provided in the base (10). The heating part (150) may be configured to heat the extraction water pumped by the pump (86) to a set temperature. The heating part (150) may be configured as a boiler that adjusts the temperature of the extraction water by heating a conduit, through which the extraction water flows, with high-temperature fluid or heat. Although not illustrated, the heating part (150) may also be configured as a heater installed on the conduit through which the extraction water flows.

A valve may be provided in the base (10). The valve may selectively block the flow of extraction water pumped by the pump (150). That is, the extraction water may be selectively supplied to the capsule (1) of the extraction part (30), which will be described later, by the valve. The valve may include an over pressure valve (OPV) (89) for preventing excessive water pressure. In addition, the valve may include a flow control valve (140) configured to control the flow of the extraction water heated while passing through the heating part (150). For example, the flow control valve may be configured as a three-way valve to selectively supply the extraction water to the two capsules (1).

The outer surface of the base (10) may be provided with a display window (411). The display window (411) may serve to provide various types of information related to the operation of the beverage apparatus or to beverages. The display window (411) may be configured to receive various types of input information for operating the beverage apparatus. For example, the display window (411) may be configured as a touch panel. As shown in FIGS. 2 and 4, an additional operation part (18) for receiving user input information may be provided on the upper surface of the base (10).

The region on which the beverage cup is placed may be provided on the upper surface of the base (10). The display window (411) may be formed on the upper surface of the base (10), and the region on which the beverage cup is placed may constitute a portion of the display window (411).

Next, the beverage apparatus according to an embodiment of the present disclosure may include a first extraction part (210).

A first capsule (11) may be seated in the first extraction part (210).

The interior of the first capsule (11) may be filled with a powder of a beverage to be extracted. For example, ground coffee powder may be filled in the first capsule (11). The beverage may also be provided in a solid state or a liquid state.

The interior of the first capsule (11) may also be filled with an additive. For example, sugar or a dairy product may be provided in the first capsule (11).

The first extraction part (210) may be provided with a punching structure for perforating the first capsule (11). Through a hole formed in the first capsule (11) by the punching structure, extraction water may be introduced into the first capsule (11).

The first extraction part (210) may be connected to a first flow path (211). Extraction water supplied through the first flow path (211) may pass through the first capsule (11) seated in the first extraction part (210) and a beverage may be extracted.

The first flow path (211) may be connected to the main flow path (130) that is connected to the water supply part (100). That is, extraction water flowing along the main flow path (130) may be guided to be drawn from the base (10) through the first flow path (211) and then supplied to the first extraction part (210).

An outlet may be provided in the first extraction part (210). Extraction water (or a beverage) supplied into the first extraction part (210) and passing through the first capsule (11) may be discharged through the outlet.

Next, the beverage apparatus according to an embodiment of the present disclosure may include a second extraction part (220).

A second capsule (12) may be seated in the second extraction part (220).

The interior of the second capsule (12) may be filled with a powder of a beverage to be extracted. For example, ground coffee powder may be filled and provided in the second capsule (12). The beverage ingredient may also be provided in a solid state or a liquid state.

The interior of the second capsule (12) may also be filled with an additive. For example, sugar or a dairy product may be provided in the second capsule (12).

The beverage ingredient or additive in the second capsule (12) may be a beverage or additive of a different type from the beverage ingredient or additive in the first capsule (11).

The second extraction part (220) may be provided with a punching structure for perforating the second capsule (12). Extraction water may be introduced into the second capsule (12) through a hole of the second capsule (12) formed by the punching structure.

The second extraction part (220) may be connected to a second flow path (221). Extraction water supplied through the second flow path (221) may pass through the second capsule (12) seated in the second extraction part (220) and a beverage may be extracted.

The second flow path (221) may be connected to the main flow path (130) that is connected to the water supply part (100). That is, extraction water flowing along the main flow path (130) may be guided to be supplied to the second extraction part (220) after being delivered from the interior of the base (10) through the second flow path (221).

An outlet may be provided in the second extraction part (220). A beverage extracted after extraction water is supplied into the second extraction part (220) and passes through the second capsule (12) may be discharged through the outlet.

Meanwhile, the first flow path (211) and the second flow path (221) may be formed to branch from the main flow path (130). That is, extraction water provided from the main flow path (130) may be selectively supplied to at least one of the first flow path (211) and the second flow path (221).

In addition, the capsules (11, 12) may be respectively provided to the first extraction part (210) and the second extraction part (220). Alternatively, each of the capsules (11, 12) may be provided to only one of the first extraction part (210) and the second extraction part (220).

In addition, the first extraction part (210) and the second extraction part (220) may be configured to discharge extracted beverages to the single discharge part (300). That is, a beverage extracted from the first capsule (11) while passing through the first extraction part (210) and a beverage extracted from the second capsule (12) while passing through the second extraction part (220) may be discharged to the discharge part (300) and then sequentially supplied to the same beverage cup (2) through a guide tube (310), so the beverages may be blended with each other.

At least a portion of the discharge part (300) may be positioned to align with the outlet of the first extraction part (210), and at least one other portion of the discharge part (300) may be positioned to align with the outlet of the second extraction part (220). For example, a portion of the discharge part (300) may be located directly below the outlet of the first extraction part (210), and another portion of the discharge part (300) may be located directly below the outlet of the second extraction part (220).

The discharge part (300) may be provided with the guide tube (310) through which an extracted beverage is discharged. The extracted beverage may be supplied to the beverage cup (2) through the guide tube (310). In this case, the guide tube (310) may be formed to be a vertically erected tube.

The guide tube (310) may be provided as a single tube. That is, beverages extracted from the respective extraction parts (210, 220) may be sequentially discharged into the discharge part (300) and then sequentially supplied into the single beverage cup (2) through the single guide tube (310), thereby being blended. Although not illustrated, the guide tube (310) may alternatively be provided as a plurality of tubes. For example, the guide tube (310) may be provided as two tubes positioned adjacent to each other. However, when the guide tube (310) is provided as a plurality of tubes, disadvantages may occur in that the opening of the beverage cup (2) must be enlarged accordingly, or additional valves must be added to control a flow to each of the guide tubes (310). Therefore, it may be preferable to provide the guide tube (310) as only a single guide tube. That is, when the guide tube (310) is provided as a single tube, a space through which a beverage is discharged may be reduced, thereby allowing the beverage to be supplied easily even to the beverage cup (2) having a narrow opening.

Meanwhile, the plurality of extraction parts (210, 220) and the discharge part (300) may be provided within a housing (32) that is provided separately from the base (10).

The housing (32) may be positioned to be spaced apart from the upper surface of the base (10). In this case, a distance between the housing (32) and the base (10) may be a distance sufficient to allow at least the beverage cup (2) to be placed therebetween.

The housing (32) may be installed to be spaced apart from the upper surface of the base (10) by using at least one support (20). For example, as shown in the drawings of the embodiment, three supports (20) may be configured to support the housing (32).

In this case, each of the first flow path (211) and the second flow path (221) may have one end connected to the flow control valve (140) within the base (1), and may be drawn out from the base (1), pass through the support (20), and then be connected to the internal of the housing (32).

Next, the beverage apparatus according to an embodiment of the present disclosure may include an information acquisition part (410).

Blending information for extracting beverages from the capsules (11, 12) seated in the respective extraction parts (210, 220) may be acquired through the information acquisition part (410). That is, on the basis of the blending information acquired through the information acquisition part (410), beverage extraction and blending for the respective capsules (11, 12) may be performed.

The information acquisition part (410) may acquire the blending information in various ways.

As an example, the information acquisition part (410) may acquire the blending information through voice recognition.

In another example, the information acquisition part (410) may acquire the blending information by receiving user input via a touch operation on a screen or by pressing a button. In this case, the screen may be the display window (e.g., an LCD) (411) that is capable of displaying various types of information (such as text or images) and receiving touch input.

In still another example, the information acquisition part (410) may receive the blending information through an application (31) of a mobile terminal (30). The application (31) may be connected to the information acquisition part (410) or a controller (420) to be described later so as to enable data communication therewith, thereby allowing the blending information to be input to the information acquisition part (410).

The application (31) may provide a screen through which a user inputs various types of information or on which various types of information is displayed. The various types of information may include at least one of blending information, capsule information, recipe information, taste evaluations, and blending histories. The application (31) may further provide a screen capable of presenting information of each of the capsules (11, 12). The information of each of the capsules (11, 12) may include a mounting position (extraction part position) of the corresponding capsule (11, 12) or a name of a beverage stored in each of the capsules (11, 12) or a blended beverage.

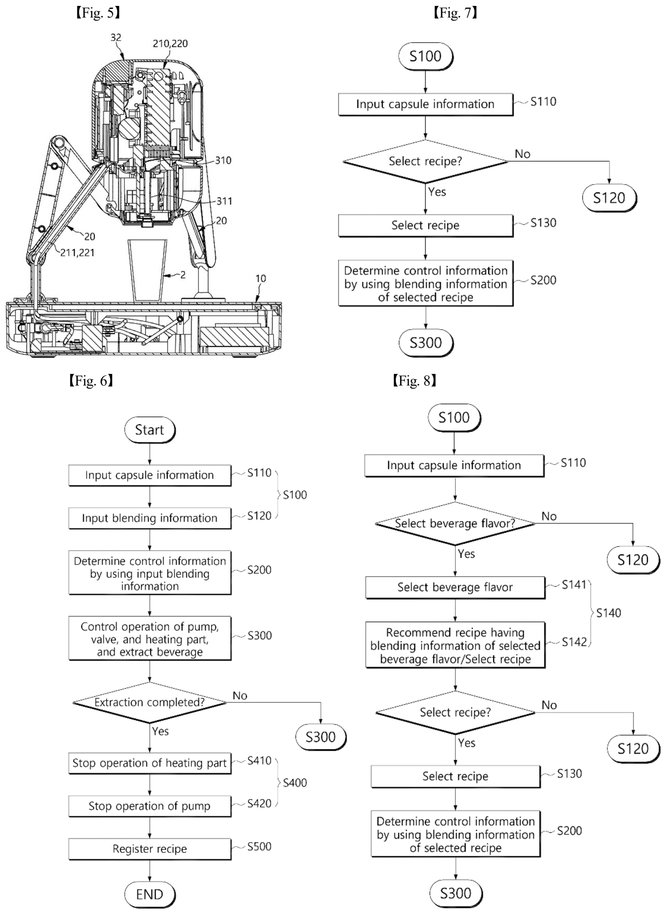

FIGS. 3 to 7 illustrate respective embodiments of screen configurations of the application (31). Here, FIG. 3 illustrates a screen configuration that guides the positions of the respective capsules (11, 12) or provides the corresponding blending information. FIG. 4 illustrates a screen configuration that provides positions of the capsules (11, 12) for the extraction parts (210, 220), capsule information, capsule information, and blending information. FIG. 5 illustrates a screen configuration displayed upon completion of extraction. FIG. 6 illustrates a screen configuration that provides extraction histories. FIG. 7 illustrates a screen configuration that provides recommended recipes.

The blending information received by the information acquisition part (410) may include the extraction order of beverages for each extraction part. The blending information received by the information acquisition part (410) may also include the extraction volume or extraction ratio of a beverage for each extraction part.

In addition, the blending information received by the information acquisition part (410) may further include at least one of an extraction temperature, an extraction pressure, and an extraction time for each extraction order.

Meanwhile, the beverage apparatus according to an embodiment of the present disclosure may include the heating part (150) that heats extraction water.

The heating part (150) may be formed as a coil-type heater formed to be wound along the outer circumference of the main flow path (130) through which the extraction water flows. Although not illustrated, the heating part (150) may be configured in a structure in which the main flow path (130) passes through a space in which a high-temperature fluid (e.g., water or steam) is stored.

The heating part (150) may apply power as needed to heat the main flow path (130), or may cut off the application of power to stop the heating of the main flow path (130). That is, the heating part (150) may operate to adjust the temperature of extraction water.

When the beverage apparatus is configured to receive extraction water from a water purifier, the temperature of the extraction water may be adjusted by using a heater or a boiler provided in the water purifier. In this case, the heating part (150) may be omitted.

Although not illustrated, the heating part (150) may alternatively be provided in each of the first flow path (211) and the second flow path (221).

In addition, although not illustrated, a cooling part may be provided to lower the temperature of extraction water supplied to each of the extraction parts (210, 220). In this case, the cooling part may be provided in each of the flow paths (211, 221).

Next, the beverage apparatus according to an embodiment of the present disclosure may include the controller (420).

The controller (420) may control the water supply part (100). That is, the water supply part (100) may adjust the supply volume of extraction water under the control of the controller (420).

The controller (420) may control the heating part (150). That is, extraction water flowing along the main flow path (130) or each of the flow paths (211, 221) may be heated to a set temperature by the operation of the heating part (150) under the control of the controller (420).

The controller (420) may control the valve (140). That is, the valve (140) is operated under the control of the controller (420) to allow extraction water to flow to the first extraction part (210) or the second extraction part (220). In this case, the controller (420) may control time during which the extraction water is supplied to the first flow path (211) or the second flow path (221) by controlling the opening time or closing time of the valve (140) for each flow path.

The controller (420) may control an operation of each component according to control information. For example, the controller (420) may determine, on the basis of blending information, control information regarding a volume of extraction water supplied to the first extraction part (210) or the second extraction part (220), and a supply sequence of the extraction water. The control information may include the operating pressure of the pump (120), the operating time of the pump (120), and the operation timing of the valve (140). For example, the supply volume of the extraction water may be determined by the control information related to the operating pressure and operating time of the pump (120), and the supply sequence or supply time of the extraction water may be determined by the control information related to the operation timing of the valve (140). The control information may further include information regarding a power-application timing of the heating part (150) to adjust the temperature of the extraction water, or information for controlling an output of the heating part (150).

The blending information may include information input through the information acquisition part (410) and at least one of one or more recipes pre-registered in the controller (420). In this case, the recipe may be information data that includes information regarding the extraction sequence of extraction water for each of the extraction parts and the extraction volume of the extraction water for each of the extraction parts. The recipe may further include at least one piece of information among a temperature of extraction water for each of the extraction parts, a pressure of extraction water for each of the extraction parts, a supply time of extraction water for each of the extraction parts, a temperature of extraction water for each extraction sequence, a pressure of extraction water for each extraction sequence, and a supply time of extraction water for each extraction sequence.

The recipe may include at least one of a recipe recommended according to the flavor of a beverage (recommended by a third party) and a recipe directly registered by a user.

The controller (420) may include a memory (421) capable of recording information. The recipe may be stored in the memory (421) in a modifiable manner.

Hereinafter, the control method of the beverage apparatus according to an embodiment of the present disclosure will be described.

First, the control method of the beverage apparatus according to an embodiment of the present disclosure may include an information acquisition step (S100) of receiving blending information for extracting beverages from the capsules (11, 12).

The information acquisition step (S100) may be performed after the capsules (11, 12) are respectively provided to the extraction parts (210, 220). In this case, the placement positions of the first capsule (11) and the second capsule (12) may be arbitrarily determined by a user. For example, a user may provide the first capsule (11) to the first extraction part (210) and the second capsule (12) to the second extraction part (220) at the discretion of the user.

The information acquisition step may be performed before the capsules (11, 12) are respectively provided to the extraction parts (210, 220). In this case, the positions of the capsules (11, 12) provided to the extraction parts (210, 220) may be recommended on the basis of the information input during the information acquisition step.

The information acquisition step may include a first process (S110) of acquiring information (capsule information) of the capsules (11, 12) containing ingredients to be extracted.

The capsule information may include at least one of a unique code (e.g., an identification number, a barcode, or a QR code), an origin (e.g., Colombia, Ethiopia, Kenya, Panama, etc.), and a variety (e.g., Arabica, Robusta, Liberica, etc.) of the capsules (11, 12) to be extracted.

The capsule information may be acquired by a user directly inputting information through the information acquisition part (410). For example, a user may input an identification number of the corresponding capsule (11, 12) or have a barcode or QR code recognized through the information acquisition part (410).

The capsule information may be input by a user selecting one of the lists of the capsules (11, 12) displayed through the display window (411). In this case, the list of each of the capsules (11, 12) may be distinguished and provided on the basis of at least one of a capsule manufacturer, an origin or variety of a beverage stored in each of the capsules, a flavor of the beverage, and the number of recommendations.

The capsule information acquired in the first process (S110) may further include the positions of the capsules (11, 12) for the extraction parts. That is, it is possible to additionally input, through the information acquisition part (410) or the application (31) installed on the mobile terminal (30) of a user, that the first capsule (11) is seated in the first extraction part (210) and the second capsule (12) is seated in the second extraction part (220).

Of course, the position information of each of the capsules (11, 12) for the extraction parts may be acquired by the beverage apparatus automatically recognizing when a user seats the capsules (11, 12) in the extraction parts (210, 220), respectively. For example, by providing a barcode reader or QR code reader in each of the extraction parts (210, 220), information of the capsules (11, 12) seated in the corresponding extraction parts (210, 220) may be automatically acquired. In this case, in a first sub-process, the step of acquiring the positions of the capsules (11, 12) for the extraction parts through the information acquisition part (410) may be omitted.

The information acquisition step may include a second process (S120) of acquiring blending information related to the capsules (or beverages).

The blending information in the second process (S120) may be input through the information acquisition part (410). For example, the blending information may be input via voice recognition, by touching a screen or pressing a button displayed on the display window (411), or through the application (31) of the mobile terminal (30) that a user has.

The blending information may include at least one of an extraction order, an extraction volume and an extraction ratio for each of the capsules (or each of the extraction parts).

The blending information may be input at the discretion of a user or on the basis of a recipe recommended by the controller (420). The recipe may be one of recipes stored in the memory (421) of the beverage apparatus, a recipe personally acquired by a user, or a recipe recommended by a third party (e.g., an expert).

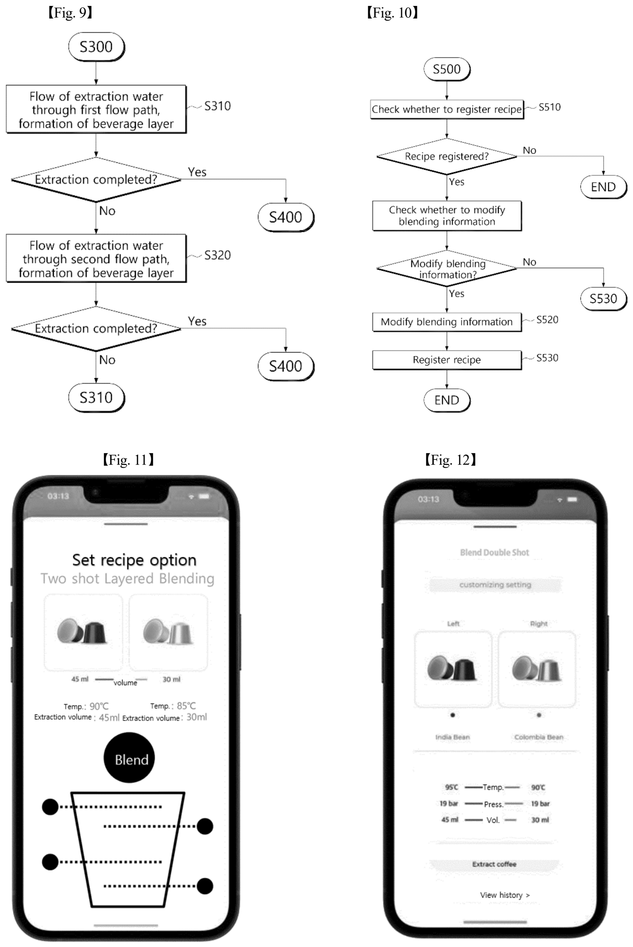

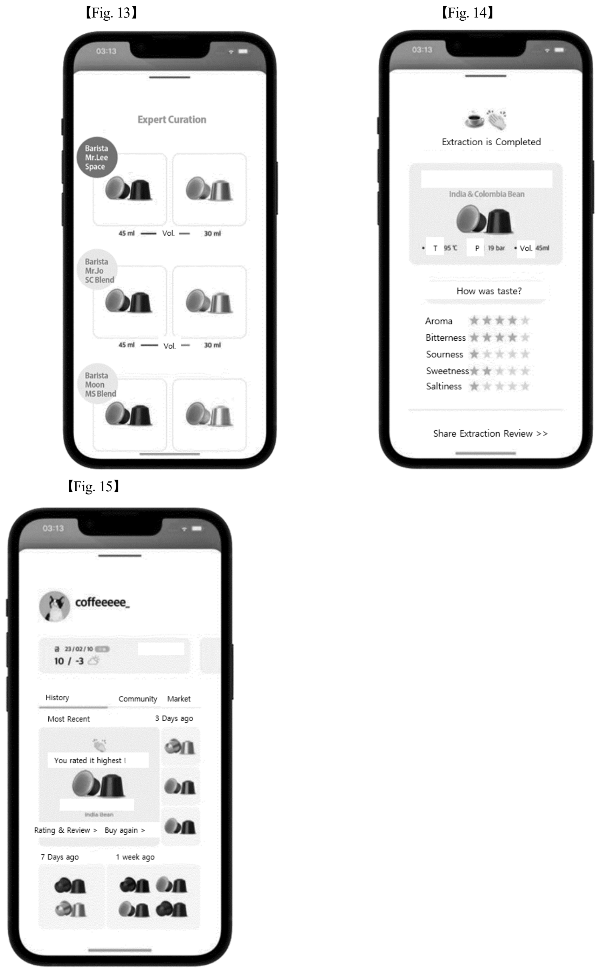

FIGS. 11 and 12 are examples of screens showing a state in which a user inputs the blending information, and FIG. 13 is an example of a screen showing a state in which a recipe recommended by a third party is selected.

The extraction order included in the blending information may include three or more orders. That is, while beverages extracted from the two capsules (11, 12) may be extracted to form two layers in the beverage cup (2), the beverages may be extracted to form three or more beverage layers.

For example, after a beverage from the first capsule (11) is extracted first, a beverage from the second capsule (12) may be extracted, and then the beverage from the first capsule (11) may be extracted again, so that a blended beverage composed of three different beverage layers may be provided in the beverage cup (2).

When the beverages from the two capsules (11, 12) are of a type that mixes well with each other, distinction between the individual beverage layers may be less pronounced, whereas when the beverages from the two capsules (11, 12) are of a type that does not mix well, the distinction between the beverage layers may be more pronounced.

The extraction order of the beverage layers may be determined such that a beverage that tends to settle relatively lower is extracted first.

The extraction order of each of the beverage layers may be determined to be different according to the flavor of a beverage from each of capsule.

In addition, the extraction volume for each of the beverage layers may be the same for all of the layers, different for all of the layers, or different for only some of the layers.

For example, a beverage of a first layer (a lowest layer) may be extracted in a volume of 10ml, a beverage of a second layer (immediately above the first layer) may be extracted in a volume of 20ml, and a beverage of a third layer (immediately above the second layer) may be extracted in a volume of 10ml.

In addition, the blending information input in the first and second processes may further include at least one of the extraction temperature, extraction pressure, and extraction time for each extraction sequence. That is, by adjusting the temperature, pressure, or time to be different for each extraction sequence, a user may create a personalized recipe even for the same beverage.

For example, the beverage of the first layer (the lowest layer) may be set to be extracted in a volume of 10ml with an extraction pressure of 8bar and a temperature of 80°C, the beverage of the second layer (immediately above the first layer) may be set to be extracted in a volume of 20ml with an extraction pressure of 8bar and a temperature of 80°C, and the beverage of the third layer (immediately above the second layer) may be set to be extracted in a volume of 10ml with an extraction pressure of 9 bar and a temperature of 87°C.

Meanwhile, when receiving the extraction order of the blending information in the second process (S120), the extraction order may be recommended on the basis of the characteristics of beverages stored in the capsules (11, 12). For example, it may be recommended that the beverage of a capsule with a relatively lower extraction temperature be extracted first. This may prevent or resolve issues such as the need for a separate cooling structure to lower the temperature of heated extraction water or prolonged pauses in extraction to allow the beverage to cool on its own.

The information acquisition step (S100) may include a third process (S130) of selecting a recipe.

The recipe in the third process (S130) may be data having predetermined blending information according to the type of each capsule (11, 12) (the type of a beverage). That is, the recipe may include at least one of the extraction order and the extraction volume or extraction ratio for each capsule. Accordingly, the extraction order and the extraction volume or extraction ratio for each capsule may be automatically selected by a user selecting the recipe. Meanwhile, the recipe may further include at least one of extraction temperature, extraction pressure, and extraction time for each extraction order. The extraction temperature, extraction pressure, and extraction time may be related to various flavors of extracted beverages (such as aroma, bitterness, sourness, sweetness, saltiness, etc.).

The recipe may include multiple listed recipes and may be provided through the display window (411) or the application (31). That is, during the information acquisition step, a user may select any one of the recipes, thereby improving convenience of use.

It may be preferable that only the recipes related to the capsules (11, 12) provided to the respective extraction part (210, 220) be listed and provided. In this case, it may be preferable that the type of a beverage be indicated in the title or file name of each of the recipes so that a user may easily recognize it. Of course, all recipes stored in the memory (421) may be provided regardless of the types of the capsules (11, 12).

The recipes may be provided by flavor or by a beverage type.

The recipes may be recommended. For example, the controller (420) may recommend the most frequently selected recipe based on the capsules (11, 12) provided in the respective extraction parts (210, 220), or recommend a recipe selected to produce a flavor closest to the desired taste of a user. Alternatively, recipes may be recommended in order of popularity based on the number of recommendations from others.

Meanwhile, when the user does not select the recipe and instead directly inputs the extraction order and the extraction volume or extraction ratio for each capsule, this information may be registered as a separate user recipe and stored in the memory (421). This user recipe may later be provided during the information acquisition step either as recommendations or through retrieval.

In addition, the information acquisition step (S100) may include a fourth process (S140) of selecting the flavor of the blended beverage. That is, by allowing a user to select the desired flavor of the blended beverage through the information acquisition part (S141), blending information considering the beverage of the corresponding capsule may be automatically recommended (S142). The flavor of the blended beverage selected in the fourth process (S140) may include at least one of aroma, bitterness, sourness, sweetness, and saltiness.

For example, a screen for selecting aroma, bitterness, sourness, sweetness, and saltiness may be displayed on the display window (411), and when selection for each of the flavor is made, a recipe having blending information considering the selected flavor may be automatically input, or two or more recipes considering the selected flavor may be recommended.

The blending information included in the recipe may include the extraction order for each capsule and the extraction volume or extraction ratio for each capsule. The blending information included in the recipe may further include at least one of the following pieces of information: the temperature of extraction water for each extraction part, the pressure of the extraction water for each extraction part, the supply time of the extraction water for each extraction part, the temperature of the extraction water for each extraction order, the pressure of the extraction water for each extraction order, and the supply time of the extraction water for each extraction order.

Next, the control method of the beverage apparatus according to an embodiment of the present disclosure includes a control information determination step (S200).

The control information determination step (S200) may determine control information for extracting a beverage from each capsule (11, 12) provided to each extraction part (210, 220).

The control information determination step (S200) may determine the control information on the basis of the blending information input in the information acquisition step (S100).

The control information in the control information determination step (S200) may be information for controlling the water supply part (the pump) (100) and the valve (140) operated on the basis of the extraction order of each capsule (11, 12) and the extraction volume or extraction ratio of a beverage for each extraction order. The control information may include the operating pressure of the pump (120), the operating time of the pump (120), the operation timing of the valve (140), etc. That is, the controller (420) may control the operations of the pump (120) of the water supply part (100) and the valve (140) by using the control information.

The control information may further include information for operating the heating part (150). That is, the operation of the heating part (150) may allow the extraction temperature of extraction water to be adjusted.

In particular, the control information may further include information for controlling the extraction temperature, extraction pressure, and extraction time for each extraction sequence.

Next, the control method of the beverage apparatus according to an embodiment of the present disclosure may include a blending step (S300).

In the blending step (S300), the operations of the pump (120), the valve (140), and the heating part (150) may be controlled by the controller (420). Accordingly, beverages from each capsule (11, 12) may be sequentially extracted and blended.

For example, in the blending step (S300), the controller (420) may control the operation of the pump (120) of the water supply part (100) to adjust the extraction pressure and extraction volume. In the blending step (S300), the controller (420) may control the operation of the heating part (150) to adjust the extraction temperature. In the blending step (S300), the controller (420) may control the operations of the pump (120) and the valve (140) to adjust the extraction order and extraction time.

Thus, in the blending step (S300), extraction water may be supplied to each of the extraction parts (210, 220) in a predetermined order, and extracted beverages, having passed through the capsules (11, 12) of the extraction parts (210, 220), may be sequentially provided to the discharge part (300). In addition, the extracted beverages provided to the discharge part (300) may be discharged into the beverage cup (2) through the guide tube (310) of the discharge part (300).

Accordingly, in the beverage cup (2), two or more beverages may be sequentially dispensed and blended according to each extraction order and in extraction volume for each extraction order. For example, as extraction water is supplied to the first flow path, a first beverage layer extracted from the first capsule may be formed in the beverage cup. Subsequently, as the extraction water is supplied to the second flow path, a second beverage layer extracted from the second capsule may be formed on top of the first beverage layer in the beverage cup. When the blending information is registered to provide a third beverage layer, after the second beverage layer is formed, the extraction water may be controlled to be supplied to the first flow path, thereby forming a third beverage layer extracted from the first capsule on top of the second beverage layer.

Next, the control method of the beverage device according to an embodiment of the present disclosure may include an extraction completion step (S400).

The extraction completion step (S400) is a process in which, after beverages from each capsule (11, 12) are extracted in a predetermined order, the supply of additional extraction water to each extraction part may be controlled so that no further extraction occurs.

This extraction completion step (S400) may include a process of stopping the operation of the heating part (150) (S410) and a process of stopping the operation of the pump (120) (4520).

In the extraction completion step (S400), a screen guiding blended beverages may be provided on the display window or on the screen of the application. For example, as shown in the accompanying FIG. 10, at least one of the beverage name, temperature, pressure, and volume of each of two blended beverages may be displayed on the application screen (or the display window), so that a user may accurately recognize the blended beverages.

Meanwhile, the control method of the beverage device according to an embodiment of the present disclosure may further include a recipe registration step (S500).

The recipe registration step (S500) may be performed by receiving confirmation as to whether to register the recipe of an extracted beverage after the performance of the blending step (S300) or after the performance of the extraction completion step (S400). For example, after the extraction completion step (S400) is performed, the information acquisition part (410) may check whether the recipe is registered (S510), and when a user agrees to register the recipe, the recipe may be stored in the memory (421) as the recipe of the user (S530). The stored recipe may later be provided along with other recipes for selection when a beverage blending request occurs and the information acquisition step (S100) is performed. That is, even if a plurality of pieces of blending information for which the recipe is selected during the information acquisition step (S100) is not input, the blending information stored in the recipe may be input all at once.

The recipe registration step (S500) may include a process (S520) for modifying blending information stored in the recipe. That is, by modifying the blending information stored in the recipe to create a new recipe, it may be possible to produce a blended beverage with a flavor different from that of the currently extracted blended beverage.

In addition, the recipe registration step (S500) may provide a screen on the application (or the display window) that allows assigning a score to the recipe and presenting the history of previously executed recipes. For example, as shown in FIG. 11, by displaying the recipe history on the application screen (or the display window), a user may evaluate the current recipe or review the history and evaluations of previous recipes.

Next, the process of providing a blended beverage by using the control method of the present disclosure described above will be explained with reference to each example.

**[Table 1]**

| Extraction part | Extraction volume(ml) | Pressure(bar) | Temperature(°C) |
|---|---|---|---|
| First extraction part | 10 | | |
| | 10 | | |
| | 10 | | |
| | 10 | | |
| Second extraction part | 10 | | |
| | 10 | | |
| | 10 | | |
| | 10 | | |

In the case of [Table 1] above, an example is shown in which eight layers of beverages are sequentially extracted into a single beverage cup.

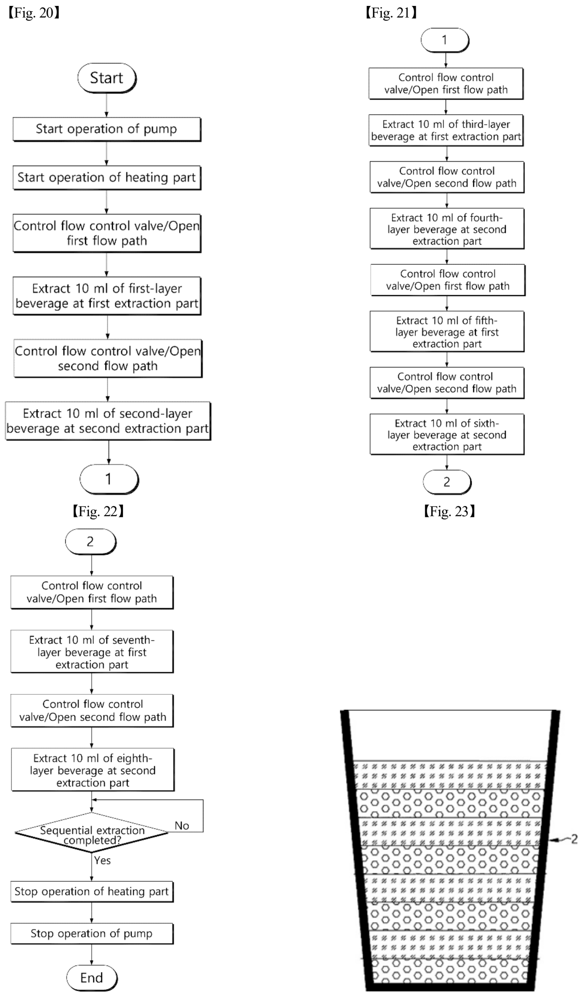

In this case, the process as illustrated in FIGS. 20 to 22 is followed.

That is, in a state in which the pump (120) is operated and the heating part (150) is operated, the flow control valve (140) may be controlled to supply extraction water to each extraction part (210, 220). The extraction water may be sequentially supplied so that 10ml of a beverage is extracted from each extraction part (210, 220) per extraction, totaling 80ml of the beverage (the first extraction part: 40ml, the second extraction part: 40ml).

For example, the total eight layers of the beverage may be sequentially extracted from different extraction parts (210, 220), and in this case, conditions for extraction volume, extraction temperature, and extraction pressure may be set to be the same.

Thus, a blended beverage having a total of eight layers as shown in FIG. 23 may be provided.

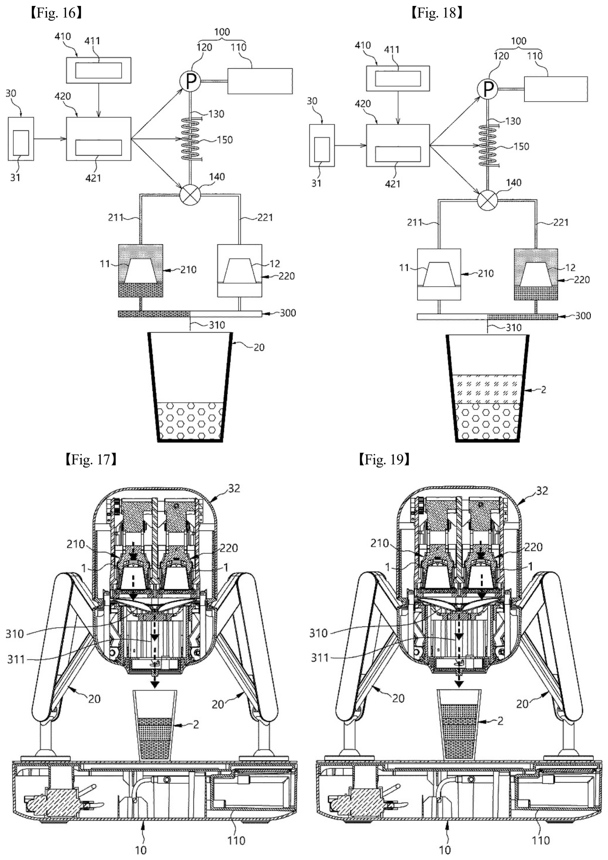

FIGS. 16 to 19 are views illustrating the states in which extraction water is sequentially supplied to each extraction part (210, 220) and beverages are extracted.

**[Table 2]**

| Extraction part | Extraction volume(ml) | Pressure(bar) | Temperature(°C) |
|---|---|---|---|
| First extraction part | 10 | 8 | 80 |
| | 10 | 9 | 87 |
| | 20 | 10 | 90 |
| Second extraction part | 20 | 9 | 80 |
| | 10 | 8 | 89 |
| | 10 | 7 | 90 |

In the case of [Table 2] above, an example is provided in which a user sequentially extracts six layers of beverages into a single beverage cup, varying the extraction volume, pressure, and temperature for each layer.

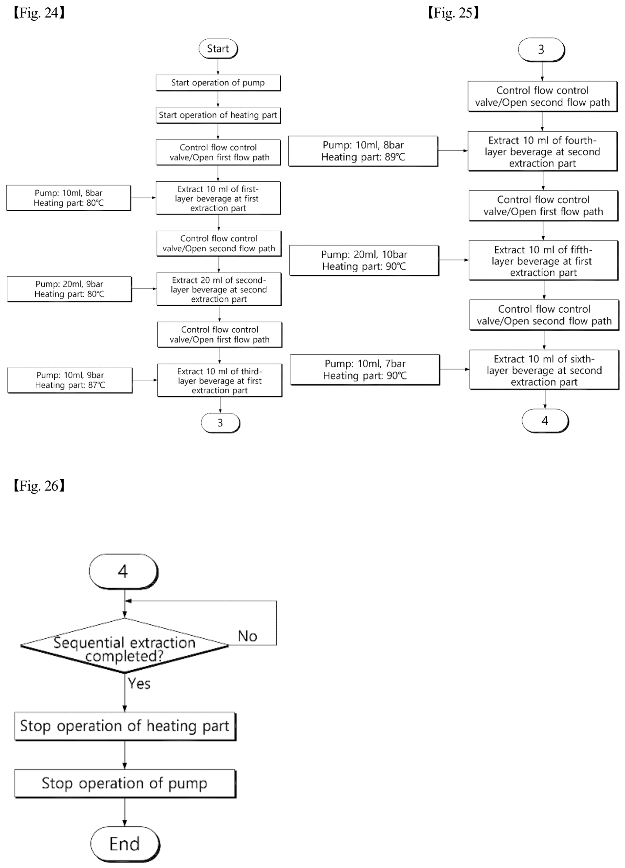

In this case, the process as illustrated in FIGS. 24 to 26 is followed.

That is, in a state in which the pump (120) is operated and the heating part (150) is operated, the flow control valve (140) may be controlled to supply extraction water to each extraction part (210, 220). 40ml of the extraction water may be supplied to each extraction part (the first extraction part: 40ml, the second extraction part: 40ml), but each beverage layer may be extracted under different conditions of extraction volume, temperature, or pressure.

For example, a beverage of the first layer and a beverage of the second layer may be sequentially extracted from different extraction parts (210, 220) under different extraction volumes and extraction pressures.

A beverage of the third layer and a beverage of the fourth layer may be extracted in the same volumes but under different pressure conditions and different temperature conditions.

A beverage of the fifth layer and a beverage of the sixth layer may be extracted under the same temperature conditions but with different extraction volume conditions and different pressure conditions.

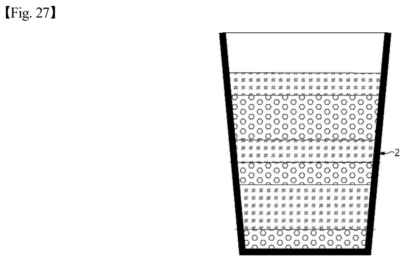

Thus, a blended beverage having a total of six beverage layers as shown in FIG. 27 may be provided.

Meanwhile, although not described or illustrated, the extraction conditions may further include conditions for extraction time. For example, the extraction time may differ for each layer.

Ultimately, beverages from the two capsules (11, 12) may be sequentially extracted and provided in the beverage cup (2), and through this sequential provision of the beverages, a blended beverage flavor, rather than a single beverage flavor, may be enjoyed.

In particular, during the extraction of beverages from each of the capsules (11, 12), the temperature, pressure, or extraction time of the extraction water may be set to be different for each extraction sequence. Accordingly, a beverage delivered into the beverage cup (2) may provide not merely a simple mixture of the two beverages but a variety of flavors (aroma, bitterness, sourness, sweetness, and saltiness).

In addition, when the extraction of the beverage is completed, the operation of the heating part (150) may be stopped, and the pump (12) may be stopped, thereby ending the operation of the beverage apparatus.

The beverage apparatus and the control method thereof according to the present disclosure, as described above, allow multiple beverages to be blended and delivered through sequential extraction.

In addition, the beverage apparatus and the control method thereof according to the present disclosure may provide various flavors, since the extraction order and extraction volume of each of the capsules (11, 12) may be individually set to be different during beverage blending.

In addition, the beverage apparatus and the control method thereof according to the present disclosure may provide an even greater variety of flavors, since the extraction temperature and pressure may be set to be different during beverage blending.

In addition, the beverage apparatus and the control method thereof according to the present disclosure may allow the blending information to be provided as a recipe, so that a plurality of pieces of blending information may be input all at once through the selection of a single recipe.

In addition, the beverage apparatus and the control method thereof according to the present disclosure may allow operation control for beverage blending to be performed even through the application (31) on the mobile terminal (30).

In addition, the beverage apparatus and the control method thereof according to the present disclosure may allow the mounting positions of the capsules (11, 12) or the supply sequence of extraction water to be set to be different depending on the type of beverage or the extraction temperature.

In addition, the beverage apparatus and the control method thereof according to the present disclosure may allow blending in a form having a plurality of beverage layers.

As described above, although all the components according to the embodiments of the present disclosure have been described as being combined or operating in combination, the present disclosure is not necessarily limited to these embodiments. That is, within the scope of the objectives of the present disclosure, one or more of the components may be selectively combined and operated.

For example, the placement of the beverage cup (2) on the base (10), the base (10) constituting the bottom of the beverage apparatus of the present disclosure, and the arrangement of the extraction parts (210, 220) and the discharge part (300) in the housing (32) provided separately from the base (10) are merely one embodiment of the beverage apparatus of the present disclosure. That is, while all the components mentioned in the embodiments may be provided as a single integrated unit, any one of the components mentioned in the embodiments may also be provided individually. Alternatively, the components may be provided in a form different from the structures described in the embodiments.

In addition, the terms "include," "comprise," or "have," as used herein, unless otherwise specifically stated, imply that the relevant component may be present, and therefore should be construed to include other components rather than to exclude other components. All terms, including technical or scientific terms, unless otherwise defined, have the same meaning as commonly understood by those skilled in the art to which the present disclosure belongs. Commonly used terms, such as terms defined in the dictionary, should be interpreted to be consistent with their contextual meanings in the relevant technology and should not be interpreted in an idealized or overly formal sense unless expressly defined in the present disclosure.

## Claims

1. A beverage apparatus comprising:
a plurality of extraction parts configured to respectively accommodate capsules and extract beverages from the capsules by receiving extraction water from a water supply part;
a plurality of flow paths configured to supply the extraction water to the plurality of extraction parts;
a valve configured to control a flow direction so that the extraction water received from the water supply part is supplied to at least one of the plurality of flow paths;
a discharge part configured to receive and discharge an extracted beverage that has passed through the plurality of extraction parts;
an information acquisition part configured to acquire blending information for blending beverages for the respective extraction parts; and
a controller configured to determine a volume of the extraction water supplied to the plurality of extraction parts and an order of supplying the extraction water on the basis of the blending information input to the information acquisition part and to control the water supply part and the valve according to the supply volume and supply order of the determined extraction water so as to blend the beverages being extracted from the capsules.

2. The beverage apparatus of claim 1, wherein the discharge part is provided with a single guide tube, and the beverages sequentially supplied from the extraction parts are sequentially discharged into a single beverage cup through the single guide tube.

3. The beverage apparatus of claim 2, wherein the discharge part is positioned below the plurality of extraction parts, receives the beverages sequentially falling from the respective extraction parts, and discharges the beverages into the single beverage cup through the guide tube.

4. The beverage apparatus of claim 1, wherein the water supply part, the valve, and the controller are provided within a base on which a beverage cup is placed, and
the plurality of extraction parts and the discharge part are provided in a housing that is provided separately from the base.

5. The beverage apparatus of claim 4, wherein the housing is installed to be spaced apart from an upper surface of the base by at least one support.

6. The beverage apparatus of claim 4, wherein the water supply part comprises:
a water tank in which the extraction water is stored; and
a pump configured to pump the extraction water stored in the water tank and supply the extraction water to the valve.

7. The beverage apparatus of claim 6, wherein the base comprises a heating part provided therein to adjust a temperature of the extraction water, which passes through the pump of the water supply part and is supplied to the valve.

8. The beverage apparatus of claim 1, wherein the blending information received by the information acquisition part comprises an extraction order of a beverage for each of the extraction parts and an extraction volume of a beverage for each extraction order or an extraction ratio of a beverage for each of the extraction parts.

9. A method for controlling a beverage apparatus, the method comprising:
an information acquisition step of acquiring at least one piece of blending information among an extraction order and an extraction volume or an extraction ratio for each of capsules respectively provided to a plurality of extraction parts;
a control information determination step of determining control information for beverage extraction according to the extraction order for each of the capsules and the extraction volume or the extraction ratio of a beverage for each extraction order by using the acquired blending information; and
a blending step of blending beverages extracted from the capsules, respectively, while controlling operations of a pump and a valve according to the determined control information.

10. The method of claim 9, wherein the information acquisition step comprises a process of acquiring information about the capsules provided to the extraction parts, respectively.

11. The method of claim 10, wherein the control information determination step comprises a process of recommending a recipe for extracting the capsules acquired in the information acquisition step.

12. The method of claim 9, wherein the blending information input in the information acquisition step comprises at least one of an extraction temperature, an extraction pressure, and an extraction time for each extraction order.

13. The method of claim 9, wherein the information acquisition step comprises a process of storing the input blending information as a personalized recipe.

14. The method of claim 9, wherein the information acquisition step comprises a process of recommending that a beverage of a capsule with a relatively lower extraction temperature be extracted first.

15. The method of claim 9, wherein the blending information input in the information acquisition step comprises either information previously registered by a user or a recommended recipe.
